# EUROPEAN PATENT APPLICATION

(11) **EP 2 409 877 A1**
(43) Date of publication of application: **25.01.2012**
(21) Application number: 11174534.5
(22) Date of filing: 19.07.2011
(51) Int. Cl.: B60N 3/10, B60N 3/08

(54) **Cupholder for a truck**

(30) Priority: 24.07.2010 NL 2005150
(71) Applicant: Daf Trucks N.V., 5643 TW Eindhoven (NL)
(72) Inventor: Kuijpers, Martinus Wilhelmina Paulus, 6164 GW Geleen (NL)
(74) Representative: Verhees, Godefridus Josephus Maria

(57) **Abstract**

A cup holder arranged as a console unit 1 comprises a frame 3 and two units 5 each having a holder 7 open at the top in which a cup can be placed. The holders 7 can be turned between a hidden position in which the holder is present inside the frame (right hand position) and an operating position in which the holder is present outside the frame (left hand position).

The units 5 furthermore each have a ring 9 which can also be turned between a hidden position in which the ring is present inside the frame 3 (right hand position) and an operating position in which the ring is present outside the frame 3 and is present directly over the holder 7 (left hand position). The opening of the ring 9 is smaller than the opening of the holder 7. If a small cup is to be retained, the ring is to be popped out, so that the cup is locked up by the ring.

## Description

### Field of the invention

The invention relates to a cup holder for a truck, comprising a frame, as well as a holder open at the top and movably connected to the frame and capable of accommodating a cup, which holder comprises a bottom and an upright sidewall, and which cup holder further comprises a ring movably connected to the frame, which holder plus ring are each separately movable between a hidden position in which they are accommodated inside the frame or are stacked away against the frame and an operating position in which they are present outside the frame or folded away from the frame, while in the operating position the ring is positioned directly over the holder and the opening of the ring is smaller than the opening of the holder.

### State of the art

A cup holder of this type is known from US 4,887,784 A. This known cup holder can be clamped on an edge of a dashboard. The frame is formed by a plate that takes up a vertical position during use and is connected to a clamp by means of a hinge construction. The holder and the ring in folded-away state rest against the frame while the ring is present between two vertical strips protruding from the plate and the holder extends over the strips. In order to use the cup holder, the holder is first to be folded downwards away from the frame and then optionally the ring is to be folded upwards. If a small cup is to be held, the ring is to be folded out so that the cup is locked up by the ring. When the ring is folded away the available space can completely be used for taking out a cup, so that as large a cup as possible can be placed in the cup holder. However, since the ring in folded-away state is present against the plate and between the strips, it will be hard to get hold of the ring during a ride.

### Summary of the invention

It is an object of the invention to provide a cup holder of the type defined in the opening paragraph, with which the ring can be moved more easily. For this purpose the console unit according to the invention is characterized in that the frame comprises a housing or cage and the holder plus ring in hidden position are present inside the frame and the ring can furthermore take up an intermediate position in which the ring is partially protruding from the frame but is not or only partially present over the open top of the holder. In consequence, the ring can be got hold of and removed from the frame in a simpler manner. The cup holder forms a console unit which can be installed as a whole in a console for example of a truck.

An embodiment of the console unit according to the invention is characterized in that the cup holder comprises a catch construction which is coupled to the holder and the ring and which takes the ring from the hidden position to the intermediate position when the holder is moved to the operating position.

Preferably te holder and the ring are turnably connected to the frame.

A further embodiment of the cup holder according to the invention is characterized in that the cup holder further comprises an ashtray which can be retracted from the frame and which is slidable into a cassette incorporated in the frame, which cassette together with the ahstray can be retracted from the frame and thus shuts off the top side of the ashtray. This is to avoid that when the ashtray is emptied in a dustbin the contents of the ashtray unintentionally drop from the ashtray.

Yet a further embodiment of the cup holder according to the invention is characterized in that the cup holder comprises a further holder and a further ring, in which the frame accommodating the two holders with rings and the ashtray form a unit that can be installed in a console as a whole.

### Brief description of the drawing figures

The invention will be further described below in more detail with reference to an example of embodiment of the cup holder arranged as a console unit according to the invention represented in the drawing figures, in which:
Fig. 1 shows the console unit with a holder turned outside the frame and the ring in intermediate position;
Fig. 2 shows the console unit with the ring in a position turned over the holder;
Fig. 3 shows the console unit with the holder in various intermediate positions; and
Fig. 4 shows an exploded view of the console unit.

### Detailed description of the drawing figures

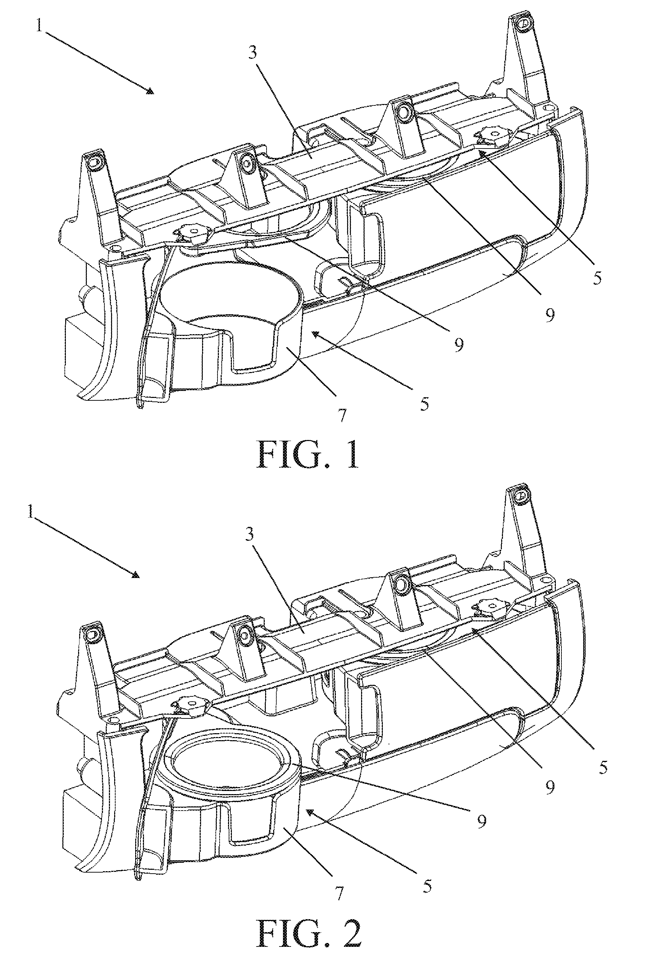

Figs. 1 and 2 show an embodiment of the cup holder according to the invention arranged as a console unit with a holder turned outside the frame and the ring in the intermediate position and the ring in a position turned over the holder respectively.

The console unit 1 comprises a frame 3 and two sub-units 5 which each have a holder 7 open at the top in which a cup can be placed. The holders have a closed bottom as well as an adjoining closed upright sidewall for receiving spilled beverage if any. The upright sidewall has a recess extending from the top edge to a distance from the bottom. As a result, a cup with a handle can be taken out of the holder with the handle protruding outwards through the recess. The holders 7 can be turned between a hidden position, in which the holder is inside the frame (right hand holder in Figs. 1 and 2) and an operating position in which the holder is present outside the frame (left hand holder in Figs. 1 and 2).

The sub-units 5 furthermore each have a ring 9 which can also be turned between a hidden position, in which the ring is present inside the frame 3 (right hand position in Figs. 1 and 2) and an operating position, in which the ring is present outside the frame 3 and is present directly over the holder 7 (left hand position in Fig. 2). The opening of the ring 9 is smaller than the opening of the holder 7. If a small cup is to be retained, the ring is to be popped out so that the cup is closed in by the ring. When the ring is folded away, the available space can completely be used for taking out a cup, so that as large a cup as possible can be placed in the sub-unit.

The ring 9 can furthermore take up an intermediate position (left hand position in Fig. 1) in which the ring is partially extended from the frame 3 but is not positioned over the open top of the holder 7. In this intermediate position it is simple to take hold of the ring 9 and pull it out of the frame 3.

The holder 7 and the ring 9 are coupled to each other by means of a catch construction which catches the ring and takes it from the hidden position to the intermediate position when the holder is transferred to the operating position. This catch construction is arranged as a protruberance present on the top of the holder 7 (not shown in the figures), which protruberance, when the holder is turned to the operating position, comes into contact with the ring 9 and turns same shortly before this operating position has been reached.

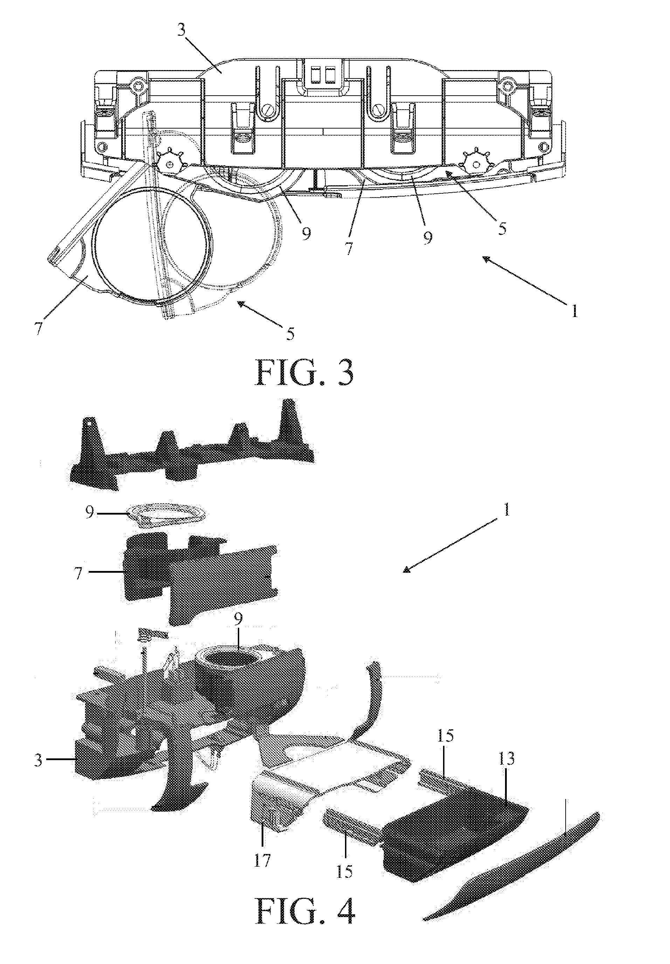

For illustrative purposes Fig. 3 shows the console unit 1 with the holder 7 in various intermediate positions.

Fig. 4 shows an exploded view of the console unit. In this Figure is shown that the console unit 1 further includes an ashtray 13 that can be pulled out of the frame 3 and is slidable over guide rails 15 into a cassette 17 accommodated in the frame. This cassette can be pulled out of the frame together with the ashtray 13 while the cassette 17 covers the top of the ashtray 13. As a result, it is avoided that when the ahstray is emptied in a dustbin the contents of the ashtray unintentionally drop from the ashtray.

Albeit the invention has been described in the foregoing with reference to the drawings, it should be pointed out that the invention is not by any manner or means restricted to the embodiment shown in the drawings. The invention also extends over any embodiment deviating from the embodiments shown in the drawing Figures within the spirit and scope defined by the claims.

## Claims

1. A cup holder (1) for a truck, comprising a frame (3), as well as a holder (7) open at the top and movably connected to the frame and capable of accommodating a cup, which holder comprises a bottom and an upright sidewall, and which cup holder further comprises a ring (9) movably connected to the frame, which holder plus ring are each separately movable between a hidden position in which they are accommodated inside the frame or are stacked away against the frame and an operating position in which they are present outside the frame or folded away from the frame, while in the operating position the ring (9) is positioned directly over the holder (7) and the opening of the ring is smaller than the opening of the holder, **characterized in that** the frame (3) comprises a housing or cage and the holder (7) plus ring (9) in hidden position are present inside the frame and the ring can furthermore take up an intermediate position in which the ring (9) is partially protruding from the frame (7) but is not or only partially present over the open top of the holder (7).

2. A cup holder (1) as claimed in claim 1, **characterized in that** the cup holder comprises a catch construction which is coupled to the holder (7) and the ring (9) and which takes the ring from the hidden position to the intermediate position when the holder (7) is moved to the operating position.

3. A cup holder (1) as claimed in claim 1 or 2, **characterized in that** the cup holder further comprises an ashtray (13) which can be retracted from the frame (3) and which is slidable into a cassette (17) incorporated in the frame, which cassette together with the ahstray can be withdrawn from the frame and thus shuts off the top side of the ashtray (13).

4. A cup holder (1) as claimed in claim 3, **characterized in that** the cup holder comprises a further holder and a further ring, in which the frame (3) accommodating the two holders (7) with rings (9) and the ashtray (13) form a unit that can be installed in a console as a whole.
